Europäisches Patentamt
European Patent Office
Office européen des brevets

(19) (11) Veröffentlichungsnummer: **0 215 373**
**A2**

(12) **EUROPÄISCHE PATENTANMELDUNG**

(21) Anmeldenummer: 86112156.4

(51) Int. Cl.⁴: **H04B 9/00**

(22) Anmeldetag: 02.09.86

Die Bezeichnung der Erfindung wurde geändert (Richtlinien für die Prüfung im EPA, A-III, 7.3).

(30) Priorität: 18.09.85 DE 3533327

(43) Veröffentlichungstag der Anmeldung: 25.03.87 Patentblatt 87/13

(84) Benannte Vertragsstaaten: AT BE CH DE FR GB IT LI NL

(71) Anmelder: **Siemens Aktiengesellschaft Berlin und München**
**Wittelsbacherplatz 2**
**D-8000 München 2(DE)**

(72) Erfinder: **Auracher, Franz, Dr.**
**Eichenstrasse 26**
**D-8021 Baierbrunn(DE)**

(54) **Verfahren und Vorrichung zur Phasenabweichungsermittlung und Verfahren zur Phasenregelung in einem optischen Homodynempfänger.**

(57) Es wird ein Verfahren zur Gewinnung von Information über eine relative Phasenabweichung zwischen der Phase eines Empfangssignals eines optischen Homodynempfängers und der Phase des optischen Signals des Lokaloszillators dieses Empfängers beschrieben. Bisher mußte die Information einem von einem größeren Gleichstromsignal überdeckten Regelsignal entnommen werden. Die Kompensation dieses Gleichstromanteils ist problematisch. Um sie überflüssig zu machen, wird die Frequenz ($f_{Lo}$ ) des Lokaloszillators um die Frequenz ($f_H$) eines bestimmten Hilfsträgers verschoben und dann das Frequenzverschobene optische Signal mit dem optischen Empfangssignal überlagert und detektiert. Das detektierte Signal wird bandpaßgefiltert, durch eine Mischung mit dem gleichen Hilfsträger auf die Frequenz null verschoben und dann tiefpaßgefiltert. Das erhaltene Gleichspannungssignal zeigt im Vorzeichen die relative Phasenlage zwischen dem Lokaloszillators und dem Empfangssignal und in der Amplitude die absolute Phasenabweichung an. Das Gleichspannungssignal kann einer Regelschleife zugeführt werden, die so eingestellt wird, daß dieses Signal möglichst klein wird.

FIG 1

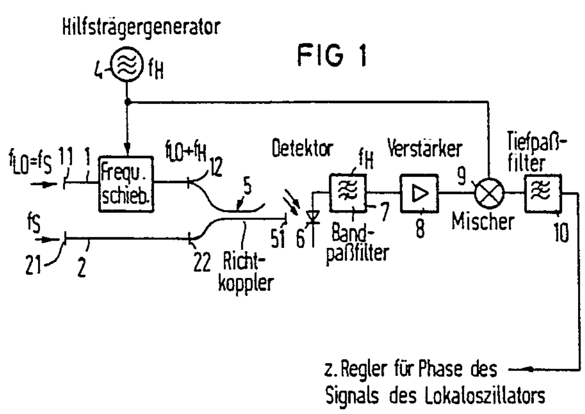


EP 0 215 373 A2

Xerox Copy Centre

# Verfahren zur Gewinnung von Information über eine relative Phasenabweichung des optischen Signals eines Lokaloszillators eines Homodynempfängers, ein Verfahren zur Regelung der Phase des Lokaloszillators und eine Vorrichtung zur Durchführung des Verfahrens zur Gewinnung der Information über die relative Phasenabweichung

Die vorliegende Erfindung betrifft ein Verfahren zur Gewinnung von Information über eine relative Phasenabweichung zwischen der Phase eines Empfangssignals eines optischen Homodynempfängers und der Phase des optischen Signals eines Lokaloszillators dieses Empfängers gemäß dem Oberbegriff des Patentanspruchs 1, ein Verfahren zur Regelung der Phase des Lokaloszillators relativ zur Phase des Empfangssignals und eine Vorrichtung zur Durchführung eines Verfahrens nach dem Anspruch 1.

Die derzeit übliche Form der optischen Nachrichtentechnik mit Intensitätsmodulation beruht auf dem Geradeausempfang, wie er in der Radiotechnik bis 1930 üblich war. Ebenso wie in der Radiotechnik bringt die Anwendung des Überlagerungsempfangs auch für die optische Nachrichtentechnik Vorteile. Diese sind:

-Höhere Empfängerempfindlichkeit und somit größere Verstärkerfeldlängen,

-günstigere Modulations-und Demodulationsmethoden,

-Einsatzmöglichkeit von optischen Verstärkern,

-Erhöhung der Kanalkapazität durch eine optisches

Frequenzmultiplexverfarhen.

Unter den möglichen Überlagerungsverfahren ergibt die Homodyntechnik zusammen mit der Phasenumtastmodulation theoretisch die größten Verbesserungen gegenüber dem Geradeausempfang. Insbesondere ist beim Homodynempfang nur die gleiche Empfängerbandbreite erforderlich wie beim Geradeausempfang, während beim Heterodynempfang mindestens die dreifache Bandbreite beim optischen Empfänger erforderlich ist, was bei hohen Bitraten zu einer sehr teueren ZF-Technik führt.

Die Schwierigkeiten beim Homodynempfang liegen in der hohen Anforderung an den optischen Sender bzw. Lokaloszillator bezüglich deren Frequenzstabilität und Phasenrauschen, da der Lokaloszillator phasenstarr mit dem Sender synchronisiert werden muß. Dazu dient eine PLL (phase locked loop)-Schaltung, die z.B. bei einer Linienbreite des Senders bzw. Lokaloszillators von 1 MHz eine Bandbreite von etwa 25 MHz haben muß.

In der heute üblichen Technik zur Phasenregelung des Lokaloszillators muß aus der detektierten optischen Leistung ein schwaches Gleichstromsignal als Regelgröße entnommen werden, das von einem wesentlich größeren, intensitätsabhängigen Strom überlagert ist. Die Kompensation des dominierenden intensitätsabhängigen Gleichstroms ist problematisch; außerdem ist ein gleichstromgekoppelter Regelkreis wegen des 1/f-Rauschens (Drift) der Verstärker ungünstig.

Aufgabe der vorliegenden Erfindung ist es, ein Verfahren der eingangs genannten Art zur Gewinnung von Information über eine relative Phasenabweichung zwischen der Phase eines Empfangssignals eines optischen Homodynempfängers und der Phase des optischen Signals eines Lokaloszillators dieses Empfängers anzugeben, bei dem die Kompen sation eines dominierenden intensitätsabhängigen Gleichstroms nicht erforderlich ist.

Diese Aufgabe wird gemäß dem kennzeichnenden Teil des Patentanspruchs 1 dadurch gelöst, daß die Frequenz des optischen Signals des Lokaloszillators um die Frequenz eines bestimmten Hilfsträgers verschoben und dann das frequenzverschobene optische Signal mit dem Empfangssignal überlagert und detektiert wird.

Bei dem erfindungsgemäßen Verfahren, das vorteilhafterweise einen nicht gleichstromgekoppelten Regelkreis ermöglicht, ist die Information über die Phasendifferenz zwischen dem optischen Signal des Lokaloszillators und dem Empfangssignal im detektierten Signal auf dem Hilfsträger enthalten.

Dieses Signal wird zweckmäßigerweise gemäß Anspruch 2 bandpaßgefiltert und durch eine Mischung mit dem gleichen Hilfsträger auf die Frequenz null verschoben (phasensynchrone Detektion, Lock-in-Prinzip).

Vorteilhafterweise wird gemäß Anspruch 3 das auf die Frequenz null verschobene Signal tiefpaßgefiltert. Nach einer solchen Tiefpaßfilterung wird ein Gleichspannungssignal erhalten, dessen Vorzeichen die relative Phasenlage zwischen dem Signal des Lokaloszillators und dem Empfangssignal angibt und dessen Amplitude der absoluten Phasenabweichung entspricht.

Bei einem Verfahren zur Regelung der Phase des Lokaloszillators eines optischen Homodynempfängers relativ zur Phase des Empfangssignals dieses Empfängers nach Anspruch 4 wird erfindungsgemäß so vorgegangen, daß die Frequenz des Lokaloszillators um die Frequenz eines bestimmten Hilfsträgers verschoben und das frequenzverschobene optische Signal mit dem optischen Empfangssignal überlagert und detektiert wird, daß das detektierte Signal bandpaßgefiltert und durch eine Mischung mit dem gleichen Hilfsträger auf die Frequenz null verschoben wird, daß dieses Signal tiefpaßgefiltert wird, und daß das tiefpaßgefilterte Signal einer Regelschleife für die Phase des Lokaloszillators zugeführt wird, die so eingestellt ist, daß dieses Signal minimal wird.

Zweckmäßig ist es, wenn gemäß Anspruch 5 das detektierte Signal verstärkt wird.

Vorzugsweise wird bei einem der genannten erfindungsgemäßen Verfahren nach Anspruch 6 als Hilfsträger ein elektrischer oder akustischer Hilfsträger verwendet.

Eine Vorrichtung zur Durchführung eines erfindungsgemäßen Verfahrens zur Gewinnung von Information über eine relative Phasenabweichung des Signals des Lokaloszillators gegenüber dem Empfangssignal ist nach Anspruch 7 gekennzeichnet durch einen optischen Frequenzschieber, durch den das optische Signal des Lokaloszillators leitbar ist und der die Frequenz dieses Signals um die Frequenz des Hilfsträgers verschiebt, und durch einen optischen Detektor, dem das frequenzverschobene Signal aus dem Frequenzverschieber und das Empfangssignal überlagert zugeführt sind.

Eine vorteilhafte Ausgestaltung einer derartigen erfindungsgemäßen Vorrichtung ist nach Anspruch 8 gebildet durch einen optischen Wellenleiter, in den an einem Ende das optische Signal des Lokaloszillators einkoppelbar ist und in dem der Frequenzschieber angeordnet ist, durch einen anderen optischen Wellenleiter, in den an einem Ende das Empfangssignal einkoppelbar ist, und durch einen an die anderen Enden der beiden Wellenleiter angeschlossenen optischen Wellenleiterkoppler, der das zugeführte frequenzverschobene Signal und das Empfangssignal überlagert und das überlagerte Signal an einem Ausgang abgibt, an den der optische Detektor gekoppelt ist.

Der optische Wellenleiterkoppler besteht bei einer derartigen Vorrichtung vorzugsweise nach Anspruch 9 aus einem optischen Richtkoppler.

Verschiedene vorteilhafte und bevorzugte Ausgestaltungen einer erfindungsgemäßen Vorrichtung, die den Frequenzschieber betreffen, sind in den Ansprüchen 10 bis 15 angegeben. Danach besteht bei der Ausgestaltung nach Anspruch 10 der Frequenzschieber aus einem akustooptischen Lichtablenker, wobei das vom Lichtablenker abgelenkte Licht mit dem Empfangssignal überlagert dem Detektor zugeführt ist. Das vom optischen Lokaloszillator abgestrahlte Licht wird in diesem akustooptischen Ablenker, beispielsweise eine Bragg-Zelle, teilweise abgelenkt. Das abgelenkte Licht ist um die Schallfrequenz, mit der der Ablenker betrieben wird, frequenzverschoben. Somit bildet die Schallfrequenz die Frequenz des Hilfsträgers. Der nichtabgelenkte Teil des Lichts zeigt keine Frequenzverschiebung und kann als Lokaloszillatorsignal für den Homodynempfang selbst verwendet werden. Der abgelenkte und somit frequenzverschobene Anteil kann zur Erzeugung eines Regelsignals für die Regelschleife verwendet werden.

Anstelle einer "Bulk"-Ausführung des akustooptischen Ablenkers ist auch eine Ausführung in Wellenleitertechnik besonders geeignet. Bei einer derartigen Ausführung besteht gemäß Anspruch 11 der Frequenzschieber aus einem geführten Schallfeld, in dem aufgrund einer akustooptischen Wechselwirkung eine Modenwandlung erfolgt, wobei die Frequenz des umgewandelten Modes um die Frequenz der Schallwelle verschoben ist. Bei der akustooptischen Wechselwirkung erfolgt eine Polarisationsdrehung des geführten Lichts, die in einer Modenwandlung vom TE-Mode zum TM-Mode resultiert (siehe dazu Le N. Binh: An Ultra-Wideband Acoustooptic Mode Converter using Guided-Wave Structures, IEE Proc. of the 1. Europ. Conf. on Integrated Optics, 14.-15. Sept. 1981, London). Die Frequenz des umgewandelten Modes ist dann um die Frequenz der akustischen Welle bzw. Schallwelle verschoben. Damit kann z.B. über eine Modenweiche bzw. Polarisationsweiche der ursprüngliche Mode zur Homodyndetektion und der umgewandelte Mode zu einer PLL-Regelung herangezogen werden.

Anstelle des akustooptischen Effekts kann auch der elektrooptische Effekt zur Frequenzverschiebung herangezogen werden. Bei einer entsprechenden Ausführungsform besteht gemäß Anspruch 12 der Frequenzschieber aus einem optischen Phasenmodulator, der die Phase des durchgeschickten Lichts entsprechend einer ungeraden Funktion der Zeit verändert. Es kann dabei jede beliebige Signalform u(t) in Form einer Funktion der Zeit verwendet werden, so lange diese Funktion u(t) eine ungerade Funktion der Zeit ist, um eine Einseitenbandmodulation zu erzielen - (siehe dazu beispielsweise E.Voges, O.Oswald, B.Schiek, A.Neyer: Optical Network Analysis bei Phase Modulated Single Sideband Detection, IEE Proc. of the 1. Europ. Conf. on Integrated Optics, 14.-15. Sept. 1981, London).

Bei einer bevorzugten Ausführungsform ändert gemäß Anspruch 13 der als Einseitenbandmodulator verwendete Phasenmodulator die Phase des Lichts linear mit der Zeit. Wird an die Elektroden des Phasenmodulators beispielsweise eine linear mit der Zeit sich ändernde Spannung $u(t) = c \cdot t$ gelegt, dann ändert sich die Phase des vom Lokaloszillator abgestrahlten Lichts linear mit der Zeit, beipsielsweise gemäß Ø(t) = k•t, und die Frequenz des Lichts verschiebt sich somit um dØ/dt = k. In den vorangegangenen Formeln bedeuten t die Zeit und c sowie k Konstanten.

Anstelle der zeitlich linear ansteigenden Spannung kann ebenso eine sägezahnförmige Spannung angelegt werden, so daß gemäß Anspruch 14 der Phasenmodulator die Phase des Lichts sägezahnförmig mit der Zeit verändert. Die Frequenzverschiebung ist dann proportional zur Amplitude und umgekehrt proportional zur Periodendauer der sägezahnförmigen Spannung.

Die Anordnungen nach den Ansprüchen 12 bis 14 sind besonders einfach, jedoch hängt bei ihnen die Frequenzverschiebung auch von der Amplitude der an die Elektroden des Phasenmodulators angelegten Steuerspannung ab.

Eine Ausführunsform, bei der dies nicht der Fall ist, ist gemäß anspruch 15 gekennzeichnet durch ein optisches Interferometer in Wellenleiterausführung mit zwei Armen, in welche das Signal des Lokaloszillators einkoppelbar ist und in denen das Licht mit um 90° phasenverschobenen Steuersignalen phasenmodulierbar ist. Nach der Überlagerung der phasenmodulierten Lichtwellen am Ausgang des Interferometers wird ein einseitenbandmoduliertes Signal erhalten, wobei die Frequenzverschiebung für das erste Seitenband gleich der elektrischen Modulationsfrequenz an den Phasenmodultoren ist (siehe dazu beispielsweise F. Auracher, R. Keil: Method for measuring the rf modulation characteristics of Mach-Zehnder-type modulators", Appl. Phys. Lett. 36 (1980) S. 626-629).

Bei der Ausführungsform nach Anspruch 15 ist der optische Wellenleiter, in dem der optische Frequenzschieber angeordnet ist, in einem elektrooptischen Kristall ausgebildet, und der Frequenzschieber besteht aus einer Vorrichtung zum Anlegen eines elektrischen Wanderfeldes an diesen optischen Wellenleiter. Diese Ausführungsform stellt somit eine weitere Variante des optischen Frequenzschiebers dar. Über das Wanderfeld wird eine Phasenanpassung zwischen dem TE-Mode und dem TM-Mode erreicht, so daß eine Umwandlung des TE-Modes in den TM-Mode erfolgt. Der umgewandelte Mode ist dann frequenzverschoben (siehe dazu beispielsweise F. Heismann, R. Ulrich: Integrated-optical frequency translator with strip waveguide, Appl. Phys. Lett. 45 (1984) S. 490-492; ein ähnlicher Frequenzschieber ist in F. Heismann, R. Ulrich: Integrated-optical Single Sideband Modulator and Phaseshifter, IEEE J. Quant. Electr. QE-18 (1982) S. 767-771).

Die Vorrichtung zum Anlegen des Wanderfeldes weist vorzugsweise gemäß Anspruch 16 eine Reihe von über dem betreffenden Wellenleiter angeordneten Elektroden und eine Steuereinrichtung zum Ansteuern der Elektroden mit phasenverschobenen Steuersignalen auf.

Die Vorrichtungen nach den Ansprüchen 10 bis 16 eigenen sich zur Integration auf einem planen Substrat (Anspruch 18). Als Substratmaterial sind besonders $LiNbO_3$ sowie das GaAs-bzw. InGaAsP-System geeignet (Anspruch 18), weil in diesen Materialien elektrooptische und akustooptische Bauelemente in Wellenleitertechnik herstellbar sind. Im GaAs-bzw. InGaAs-System ist zudem prinzipiell auch die Integration von Halbleitersender und -detektor möglich.

Die Erfindung wird anhand von Figuren in der folgenden Beschreibung näher erläutert. Von den Figuren zeigen:

Figur 1 ein Blockschaltbild einer Vorrichtung zur Gewinnung von Information über die relative Phasenabweichung zwischen der Phase des Empfangssignals eines optischen Homodynempfängers und der Phase des optischen Signals des Lokaloszillators dieses Empfängers, und

Figuren 2 bis 6 Draufsichten auf schematisch dargestellte verschiedene Ausführungsformen von optischen Frequenzschiebern.

Zum besseren Verständnis der Erfindung wird ein optischer Homodynempfänger zum Vergleich herangezogen, wie er in Walter R. Leeb, Heinz K. Philip, Arpad L. Scholtz: Homodyne receiver for ASK signals at 10 µm wavelength, Appl. Opt. 4 - (1984) S. 523) beschrieben und in der dortigen Figur 1 im Blockschaltbild dargestellt ist und wie er heute in Labors erprobt wird. Das Empfangssignals ist dort mit $e_1$ und das Signal des Lokaloszillators mit $e_0$ ezeichnet. Ein Teil des Lokaloszillators wird um 90° phasenverschoben mit einem Teil des Empfangssignals überlagert und mit einer Fotodiode detektiert.

Bei der Überlagerung der Feldstärker $E_S$ des am Empfänger ankommenden Empfangssignals mit der Feldstärke $E_{Lo}$ des Signals des Lokaloszillators in der Fototdiode entsteht ein Detektorstrom

$$i_{D1} \sim \left[E_S \sin(\omega_S t+\varphi_S) + E_{Lo}\sin(\omega_{Lo} t+\varphi_{Lo})\right]^2 =$$

$$= \left[\frac{E_{Lo}^2}{2} + \underbrace{\frac{1}{2}E_{Lo}E_S\cos(\varphi_S-\varphi_{Lo})}_{\text{Homodynsignal}} + \frac{E_S^2}{2} + \dots\right]$$

wobei $\omega_s = 2\pi fs$, $\omega_{Lo} = 2\pi f_{Lo}$, fs = Trägerfrequenz des Senders, $f_{Lo}$ = Trägerfrequenz des Lokaloszillators und das Zeichen ~ "proportional zu" bedeuten, wobei $E_{Lo} = E_s$ gesetzt ist. Die PLL-Schaltung muß die Phasendifferenz $\Delta\phi = \phi_s - \phi_{Lo}$ zwischen der Phase $\phi_s$ des Senders und der Phase $\phi_{Lo}$ des Lokaloszillators auf null regeln. Damit die Regelung das Vorzeichen von $\Delta\phi$ erkennen kann, wird in einem Regelkreis ein um 90° bzw. einem Viertel der Wellenlängen des Lichts verschobenes Signal des Lokaloszillators mit dem vom Sender ankommenden Signal bzw. Empfangssignal überlagert und detektiert. Der entsprechende Detektorstrom ist dann durch

$$i_{D2} \sim \left[E_S \sin(\omega_S t+\varphi_S) + E_{Lo}\cdot\sin\left(\omega_{Lo} t+\varphi_{Lo}+\frac{\pi}{2}\right)\right]^2 =$$

gegeben.

$$\left[\frac{E_{Lo}^2}{2} + \frac{E_S^2}{2} + \underline{\frac{1}{2}E_{Lo}E_S\sin(\varphi_S-\varphi_{Lo})} + \dots\right]$$

Damit die PLL-Schaltung das Vorzeichen der Phasendifferenz erkennen kann, muß der vom Lokaloszillator stammende und zu $E_{Lo}^2/2$ proportionale Anteil des Detektorstroms kompensiert werden. Diese Kompensation ist sehr problematisch, weil $E_{Lo}$ wesentlich größer als $E_s$ ist und daher die zu kompensierende Größe wesentlich größer als das eigentliche Nutzsignal für die PLL-Schaltung ist, das durch $(E_{Lo} E_s \sin(\phi_{Lo} - \phi_s))/2$ gegeben ist. Da das Vorzeichen der Phasenabweichung für die Regelung wichtig ist, muß außerdem der Regelverstärker gleichspannungsgekoppelt sein, so daß Driftprobleme bzw. das 1/f-Rauschen die Regelung erschweren.

Zur Vermeidung der genannten Nachteile wird bei dem hier vorgeschlagenen Verfahren das Signal -genaugenommen ein Teil des Signals -des Lokaloszillators wie bisher um 90° phasenverschoben und zusätzlich um die Frequenz $f_H$ eines Hilfsträgers frequenzverschoben. Dieses frequenzverschobene Signal wird dann mit dem Empfangssignal -genaugenommen mit einem Teil des Empfangssignals -überlagert und mit einer Fotodiode detektiert.

Die Frequenz des Hilfsträgers muß so gewählt werden, daß sie von allen auf der Senderseite vorkommenden Modulationsfrequenzen gut getrennt werden kann. Notfalls kann beim Sender ein entsprechendes Filter zur Unterdrückung der Frequenzen nahe der Frequenz $f_H$ vorgesehen werden. Der Detektor liefert dann einen Strom

$$i_D \sim \left\{E_H\cdot\sin\left[(\omega_S+\omega_H)t+\varphi_H+\varphi_{Lo}+\frac{\pi}{2}\right] + E'_S\cdot\sin(\omega_S t+\varphi_S)\right\}^2 =$$

$$= \frac{E_H^2}{2} + \frac{E_S'^2}{2} - \underline{\frac{E_H E_S}{2}\sin(\omega_H t+\varphi_H+\varphi_{Lo}-\varphi_S)} + \dots$$

wobei $E_H$ und $\phi_H$ die Feldstärke bzw. der Phasenwinkel des frequenzverschobenen Signals des Lokaloszillators sind. Die Phaseninformation $\phi_S - \phi_{Lo}$ ist nun auf einem Träger der Frequenz $f_H = \omega_H/2\pi$ aufmoduliert und kann nach einer schmalbandigen Filterung und Verstärkung durch eine weitere Überlagerung mit der Frequenz $f_H$ des Hilfsträgers wieder auf die Frequenz null heruntergemischt werden (Homodyn-oder Lock-in-Detektion):

$$E_H E_S \sin(\omega_H t + \varphi_H + \varphi_{LO} - \varphi_S) \cdot \cos(\omega_H t + \varphi_H) =$$

$$= \frac{E_H E_S}{4} \sin(\varphi_{Lo} - \varphi_S) + \frac{E_H E_S}{4} \sin(2\omega_H t + 2\varphi_H + \varphi_{Lo} - \varphi_S)$$

Der Mischterm mit der doppelten Frequenz des Hilfsträgers wird durch einen Tiefpaß weggefiltert.

Da sich der Oszillator für den Hilfsträger auf der Empfängerseite befindet, steht dieses Signal unverzerrt und ohne Phasenfehler für die Aufwärts- und anschließende Abwärtsmischung zur Verfügung, so daß die Phaseninformation $\phi_s - \phi_{Lo}$ sehr sauber abgeleitet werden kann.

Figur 1 zeigt im Blockschaltbild eine Vorrichtung zur Durchführung dieses Verfahrens. Diese Vorrichtung weist einen optischen Wellenleiter 1 auf, in den an einem Ende 11 das optische Signal des Lokaloszillators mit der Frequenz $f_{Lo} = f_s$ eingekoppelt wird und in dem ein Frequenzschieber 3 angeordnet ist. Der Frequenzschieber 3 wird mit der Frequenz $f_H$ eines Hilfsträgers betrieben, die von einem Oszillator 4 erzeugt wird.

An einem Ende 21 eines anderen optischen Wellenleiters 2 wird das Empfangssignal der Frequenz $f_s$ eingekoppelt.

An die anderen Enden 12 bzw. 22 der beiden Wellenleiter 1 und 2 ist ein optischer Richtkoppler 5 angeschlossen, der das zugeführte frequenzverschobene Signal der Fre quenz $f_{Lo} + f_H$ und das Empfangssignal mit der Frequenz $f_s$ überlagert und das überlagerte Signal an einen Ausgang 51 abgibt, dem das Detektorfenster des optischen Detektors 6 gegenüberliegt.

Die Information über die Phasendifferenz zwischen dem Signal des Lokaloszillators und dem Empfangssignal ist im Ausgangssignal des Detektors auf einem elektrischen Träger der Frequenz $f_H$ enthalten. Dieses Ausgangssignal wird in einem Bandpaßfilter gefiltert, in einem Verstärker 8 verstärkt und durch eine Mischung in einem Mischer 9 mit dem Hilfsträger der gleichen Frequenz $f_H$ wieder auf die Frequenz null verschoben. Aus dem auf die Frequenz null verschobenen Signal erhält man nach einer Tiefpaßfilterung in einem Tiefpaß 10 ein Gleichspannungssignal, dessen Vorzeichen die relative Phasenlage zwischen dem Signal des Lokaloszillators und dem Empfangssignal angibt und dessen Amplitude der absoluten Phasenabweichung entspricht. Dieses Gleichspannungssignal wird einem Regler für die Phase des Lokaloszillators, beispielsweise einem PLL-Regelschaltkreis zugeführt, der so eingestellt wird, daß dieses Gleichspannungssignal möglichst klein wird.

In der Figur 1 wie auch in den folgenden Figuren 2 bis 6 ist die Phasenverschiebung des Signals des Lokaloszillators um 90° für den PLL-Schaltkreis stillschweigend vorausgesetzt.

Die Figur 2 zeigt einen optischen Frequenzschieber 3 in Form akustooptischen Ablenkers, der aus einem mit der Frequenz $f_H$ des Oszillators 4 betriebenen Schallwandlers 40 und aus einem davon betriebenen Bragg-Ablenker 30 besteht. Das Licht des Lokaloszillators mit der Frequenz $f_{Lo}$ wird im Ablenker 3 teilweise abgelenkt. Das abgelenkte Licht ist um die Schallfrequenz $f_H$ des Ablenkers 3 frequenzverschoben und weist somit die Frequenz $f_{Lo} + f_H$ auf. Der nichtabgelenkte Teil zeigt keine Frequenzverschiebung und weist daher die Frequenz $f_{Lo}$ auf.

Die Figuren 3 bis 6 zeigen Ausführungen in Wellenleitertechnik. Die Wellenleiter 1 und 2 nach Figur 1 und der dortige Richtkoppler 5 bestehen aus Streifenwellenleitern, die auf oder in einem Substrat 20 aus elektrooptischem Material ausgebildet sind. Die Streifenwellenleiter 1 und 2 gehen ohne Unterbrechung in die parallelen Streifenwellenleiter des Richtkopplers 5 über.

Bei der Vorrichtung nach Figur 3 besteht der Frequenzschieber 3 aus einer Elektrodenstruktur in Form von zwei ineinander gesteckten Elektrodenkämmen 31 und 32, deren Zinken senkrecht zur Längsrichtung des Wellenleiters 1 verlaufen. Einer der beiden Elektrodenkämme, beispielsweise der Elektrodenkamm 32 ist geerdet und der andere Kamm 31 ist mit einer Steuerspannung der Frequenz $f_H$ aus dem Oszillator 4 beaufschlagt. Das Substratmaterial, in dem sich die Wellenleiter befinden, muß entweder selbst piezoelektrisch sein (z.B. $LiNbO_3$, InP, Quarzkristall) oder es muß auf das Substrat eine piezoelektrische Schicht (z.B. ZnO) und darauf die Elektrodenstruktur aufgebracht werden. Durch diese Elektrodenstruktur wird ein im Wellenleiter 1 geführtes Schallfeld erzeugt, so daß sowohl das über das Ende 11 in den Wellenleiter 1 eingekoppelte Licht des Lokaloszillators mit der Frequenz $f_{Lo}$ und im TE-Mode als auch das Schallfeld im Wellenleiter 1 geführt werden. Aufgrund der akustooptischen Wechselwirkung erfolgt eine Polarisationsdrehung bzw. eine Modenwandlung des geführten Lichts vom TE-Mode in den TM-Mode. Die Frequenz des aus dem Schallfeld austretenden TM-Modes ist um die Frequenz $f_H$ der Schallwelle verschoben.

In den Streifenwellenleiter 2 wird wie bei der Vorrichtung nach der Figur 1 und bei den Vorrichtungen nach den folgenden Figuren 4 bis 6 über das Ende 21 das Empfangssignal der Frequenz $f_s$ eingekoppelt, das beispielsweise in einem Glasfaserlichtwellenleiter 50 zugeführt wird.

Bei der Ausführungsform nach Figur 4 ist anstelle des akustooptischen Effekts der elektrooptische Effekt zur Frequenzverschiebung herangezogen. Der Frequenzschieber 3 besteht aus einem Phasenmodulator, der als ein Seitenbandmodulator verwendet wird. Der Phasenmodulator selbst besteht aus zwei zu beiden Seiten des Wellenleiters 1 angeordneten und parallel dazu verlaufenden Elektroden 33 und 34 auf dem elektrooptischen Substrat 20. Eine der beiden Elektroden, beispielsweise die Elektrode 34, ist geerdet und die andere Elektrode 33 ist mit einer sägezahnförmigen Steuerspannung aus dem Oszillator 4 beaufschlagt.

Wie schon erwähnt, ist die Ausführungsform nach Figur 4 besonders einfach, jedoch hängt die Frequenzverschiebung auch von der Amplitude der angelegten Steuerspannung ab. Diese Abhängigkeit tritt bei der Ausführungsform nach Figur 5 nicht auf. Bei dieser Ausführungsform ist im Wellenleiter 1 ein zweiarmiges Interferometer in Wellenleiterausführung angeordnet, dessen Arme aus den beiden Streifenwellenleitern 35 und 36 bestehen. Auf beiden Seiten jedes Wellenleiters 35 und 36 sind zwei parallel dazu verlaufende Elektroden 37 und 38 bzw. 39 auf dem elektrooptischen Substrat angeordnet. Die zwischen den beiden Streifenwellenleitern 35 und 36 angeordneten Elektroden sind der Einfachheit halber zu einer einzigen Elektrode 38 zusammengefaßt und diese Elektrode ist geerdet. Die Elektrode 37 ist mit einer Steuerspannung der Frequenz $f_H$ aus dem Oszillator 4 beaufschlagt, während die Elektrode 39 mit der um 90° phasenverschobenen Steuerspannung aus dem Oszillator 4 beaufschlagt ist. Die Phasenverschiebung wird durch einen Phasenschieber 60 erreicht. Durch diese Anordnung werden die beiden Arme 35 und 36 des Interferometers mit 90° phasenverschobenen Signalen phasenmoduliert. Nach der Überlagerung der phasenmodulierten Lichtwellen am Ausgang 356 des Interferometers wird ein einseitenbandmoduliertes Signal erhalten, wobei die Frequenzverschiebung für das erste Seitenband gleich der Frequenz $f_H$ der Steuerspannung an den Phasenmodulatoren ist, die jeweils durch die Elektroden 37 und 38 bzw. 38 und 39 gebildet sind.

Bei der Ausführung nach Figur 6 besteht der Frequenzschieber 3 aus einer Reihe von Elektroden 70, die über dem Wellenleiter 1 und in dessen Längsrichtung hintereinander auf dem elektrooptischen Substrat 20 angeordnet und an eine Steuereinrichtung 80 zum Ansteuern der Elektroden mit phasenverschobenen Steuerspannungen angeschlossen sind. Die Steuereinrichtung ist speziell so ausgebildet, daß von einschließlich einer ersten Elektrode 70 aus jede zweite Elektrode 70 mit der Steuerspannung der Frequenz $f_H$ aus dem Oszillator 4 und die übrigen Elektroden mit der um 90° phasenverschobenen Steuerspannung beaufschlagt werden. Durch diese Ansteuerung der Elektroden 70 wird an dem Wellenleiter 1, der in einem Substrat in Form eines elektrooptischen Kristalls ausgebildet ist, das elektrische Wanderfeld angelegt. In den Wellenleiter 1 wird das Signal des Lokaloszillators in TE-Mode eingekoppelt. Über das Wanderfeld wird eine Phasenanpassung zwischen dem TE-Mode und dem TM-Mode erreicht, so daß eine Umwandlung des TE-Modes in den TM-Mode erfolgt, der nach Austritt aus dem Wanderfeld um die Frequenz $f_H$ frequenzverschoben ist. Das Empfangssignal wird im TM-Mode in den Wellenleiter 2 eingekoppelt.

## Ansprüche

1. Verfahren zur Gewinnung von Information über eine relative Phasenabweichung zwischen der Phase eines Empfangssignals eines optischen Homodynempfängers und der Phase des optischen Signals des Lokaloszillators dieses Empfängers, **dadurch gekennzeichnet** , daß die Frequenz -($f_{Lo}$) des Signals des Lokaloszillators um die Frequenz ($f_H$) eines Hilfsträgers verschoben und dann das frequenzverschobene optische Signal mit dem optischen Empfangssignal überlagert und detektiert wird.

2. Verfahren nach Anspruch 1, **dadurch gekennzeichnet**, daß das detektierte Signal bandpaßgefiltert und durch eine Mischung mit dem gleichen Hilfsträger auf die Frequenz 0 verschoben wird.

3. Verfahren nach Anspruch 2, **dadurch gekennzeichnet**, daß das auf die Frequenz 0 verschobene Signal tiefpaßgefiltert wird.

4. Verfahren zur Regelung der Phase des Lokaloszillators eines optischen Homodynempfängers relativ zur Phase des Empfangssi-

FIG 1

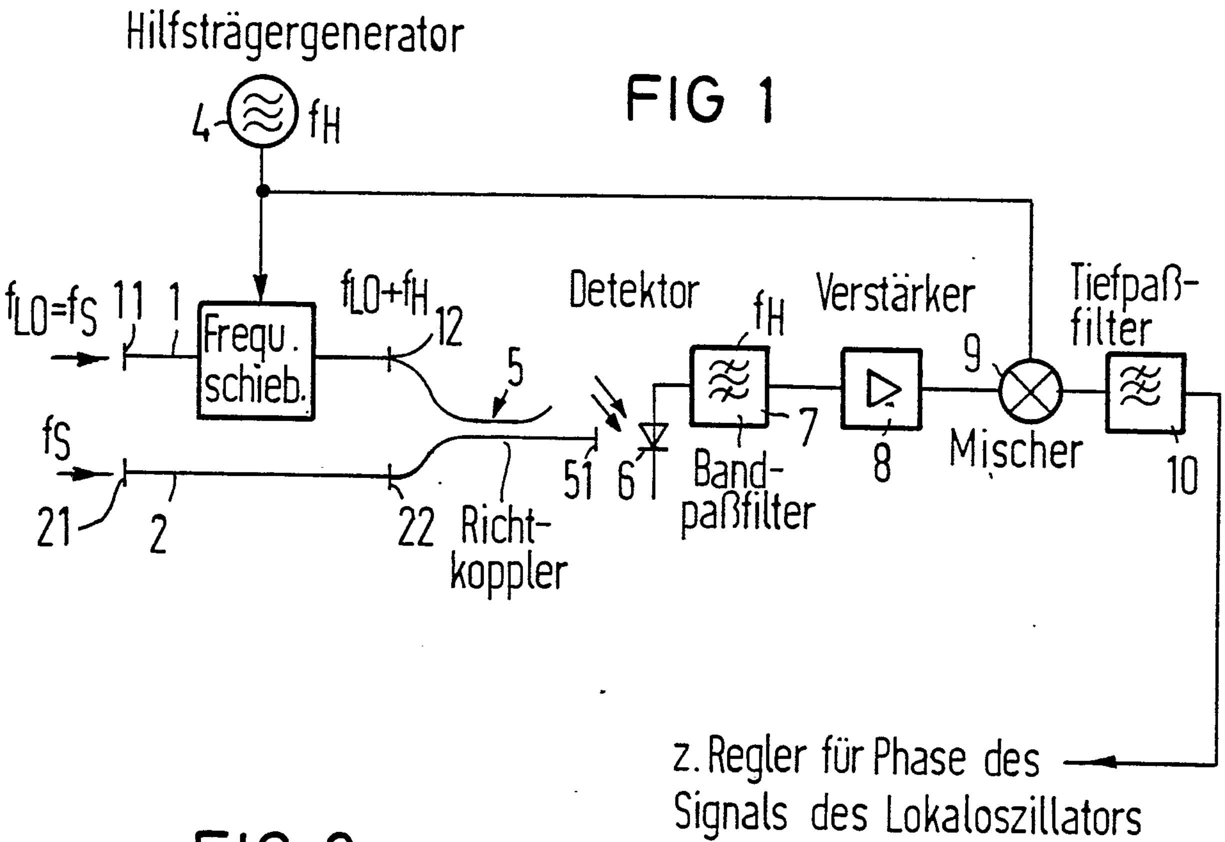


FIG 2

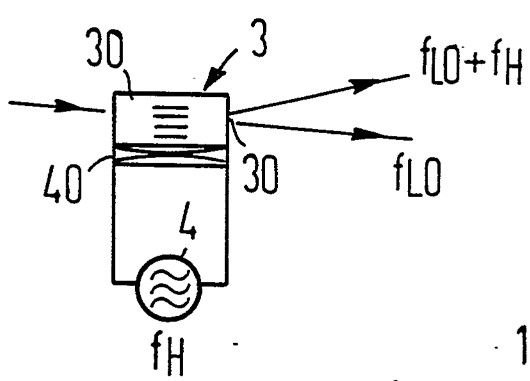


FIG 3

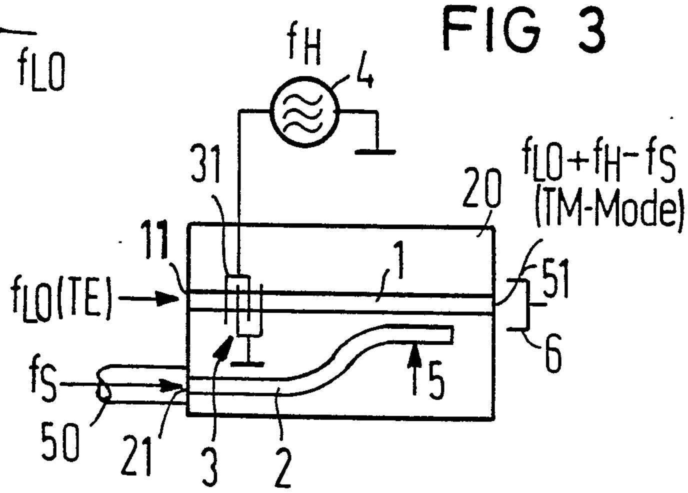

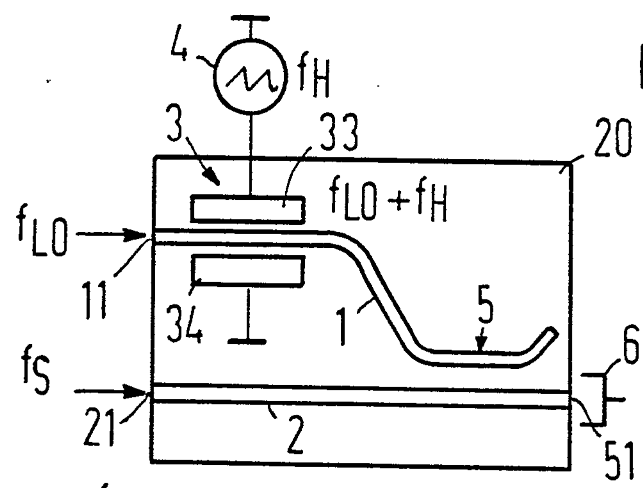


FIG 4

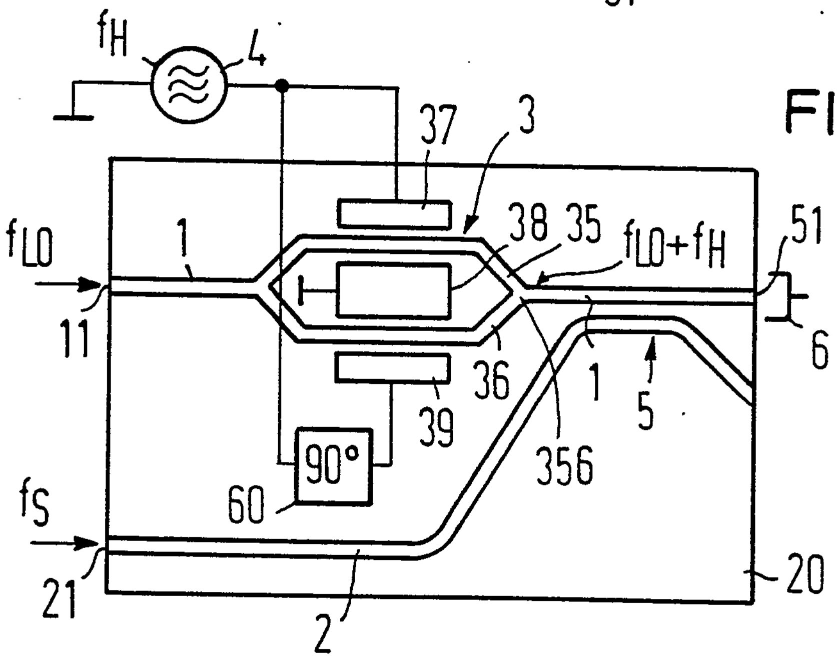


FIG 5

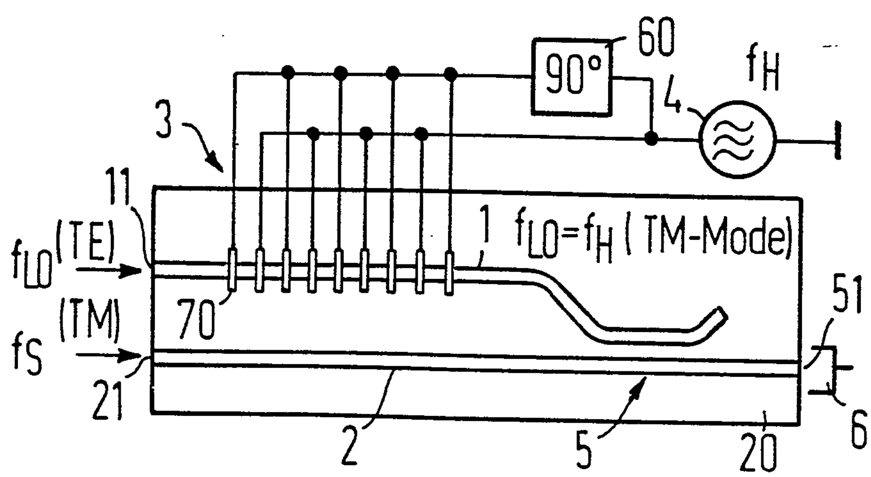


FIG 6